(19) Europäisches Patentamt European Patent Office Office européen des brevets

(11) EP 4 531 439 A1

(12) **EUROPEAN PATENT APPLICATION**

(43) Date of publication:
02.04.2025 Bulletin 2025/14

(21) Application number: 24202682.1

(22) Date of filing: 25.09.2024

(51) International Patent Classification (IPC):
H04S 7/00 (2006.01)    G06N 3/0455 (2023.01)

(52) Cooperative Patent Classification (CPC):
H04S 7/304; G06N 3/0455; H04S 2400/11;
H04S 2420/01

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.09.2023 GB 202314716

(71) Applicant: Sony Interactive Entertainment Europe
Limited
London W1F 7LP (GB)

(72) Inventors:
• ARMSTRONG, Calum
London, W1F 7LP (GB)
• COCKRAM, Philip
London, W1F 7LP (GB)
• PILATAKI MANIKA, Maria
London, W1F 7LP (GB)

(74) Representative: Gill Jennings & Every LLP
The Broadgate Tower
20 Primrose Street
London EC2A 2ES (GB)

(54) **METHODS AND SYSTEMS FOR SYNTHESISING AN HRTF**

(57) A computer-implemented method of synthesising an HRTF is disclosed. The method comprising: providing the HRTF of a subject measured at a particular measurement angle; processing the HRTF to remove localisation perception features of the HRTF, where the processing comprises: removing spectral notches from the measured HRTF, the resulting processed HRTF referred to as the HRTF'; and calculating a subject's HRTF timbre by subtracting a baseline HRTF at the measurement angle from the subject's HRTF', the baseline HRTF comprising a generalised response component such that the HRTF timbre comprises subject-specific variations in the HRTF. The method further comprises using the HRTF timbre to synthesise an HRTF. The method allows for generating a personalised timbre component of an HRTF to provide better personalisation of an HRTF, thereby providing improved binaural audio.

Fig. 1B

## Description

## FIELD OF THE INVENTION

The following disclosure relates to methods and systems for synthesising an HRFT, particularly for use in improved binaural audio for VR, AR and video gaming applications. More specifically, methods and system for synthesising a timbral component of an HRTF are described.

## BACKGROUND

Binaural audio is a crucial component of the rapidly developing immersive technologies, such as VR, AR and video gaming applications. Spatial audio, and specifically Head-Related Transfer Function (HRTF) personalisation, plays a vital role in a user's experience of virtual and augmented environments. It is necessary to precisely tune the audio experienced by the user to provide the necessary spatial audio effects to provide an immersive experience.

Head-Related Transfer Functions (HRTFs) are frequency and time-dependent signal processing filters that represent the stereo anechoic acoustic transfer function between a positional sound source and a listener's ears. HRTFs describe the way in which a person hears sound in 3D depending on the position of the sound source. HRTFs therefore provide the listener with spatial cues that help them to localize sounds in 3D space. These cues include time and level differences between ears (primarily associated with lateral localization) and peaks/notches within the frequency response of each ear (primarily associated with elevatory localization). By convolving an audio signal with an HRTF and presenting the result directly to a listener's ears (usually via headphones), a source may be simulated as if coming from the direction in which the HRTF was measured.

Given the importance of HRTFs in simulating immersive acoustic experiences in augmented reality (AR), virtual reality (VR), and gaming applications, there has been significant work focussing on synthesising personalised HRTFs for use in these applications. Multiple methods have been proposed for HRTF personalisation, including estimation given anthropometric features, simulation given the 3D geometry of a subject's ear or personalisation based on perceptual feedback. These personalised HRTFs may then be applied to an input audio signal to provide an approximation to the way a specific user experiences audio.

Despite progress, there are a number of issues with known methods for HRTF synthesis and personalisation. Thus far, progress has focussed on features of HRTFs associated with localisation, particularly on synthesising the spectral features such as the pinnae notches. However, focussing synthesis and personalisation purely on these known features of the HRTF, having the most significant influence on localisation, places a restriction on the level of personalisation achievable, and therefore limits the quality of the audio and experience of the user.

There is accordingly a need for new HRTF synthesis and personalisation methods that make progress in overcoming the above issues.

## SUMMARY OF INVENTION

According to a first aspect, the present disclosure provides a computer-implemented method of synthesising an HRTF, the method comprising: providing the HRTF of a subject measured at a particular measurement angle; processing the HRTF to remove localisation perception features of the HRTF, where the processing comprises: removing spectral notches from the measured HRTF, the resulting processed HRTF referred to as the HRTF'; and calculating a subject's HRTF timbre by subtracting a baseline HRTF at the measurement angle from the subject's HRTF' such that the HRTF timbre comprises subject-specific variations in the HRTF; the method further comprising: using the HRTF timbre to synthesise an HRTF.

Prior art methods of HRTF synthesis have focussed solely on attempts to adjust the location perception features of the HRTF, particularly the ITD, ILD and pinnae notches, in order to personalise an HRTF to a user. These methods fail to account for the timbral component, defined here at the HRTF timbre, which encodes frequency dependent magnitude changes on an audio signal that do not provide the location cues in the HRTF but nevertheless provide characteristic changes to an audio signal specific to the subject. In order to simulate a complete perception of an audio signal and provide a truly immersive audio experience it is therefore necessary to adjust the HRTF timbre. By processing an HRTF to remove spectral notches and then subtracting an average response, the timbral component of an HRTF can be extracted. This can then be stored for use in HRTF synthesis to provide fuller and more realistic binaural audio than previous attempts to synthesis HRTFs.

The baseline HRTF preferably comprises a generalised (notch-removed) HRTF - i.e. a component of the HRTF generalised over all or a plurality of subjects. In this way, HRTF timbre comprises the subject-specific variations in HRTF timbre. The baseline HRFT preferably comprises generalised component of a spectral notch-removed HRTF (an HRFT'), common to all HRFTs so the difference between a subject's HRTF' and the baseline HRFT gives the subject-dependent Timbre variation. Preferably the baseline HRTF comprises an average HRTF', the average HRTF' comprising the average HRTF' at the measurement angle calculated over a plurality of subjects. In some example, the baseline HRFT' comprises approximately the calculated average HRFT' for example within 5dB of the average HRFT'.

Preferably using the HRTF timbre to synthesise an HRTF comprises combining the HRTF timbre with the baseline HRTF. In preferable examples, the method comprises processing a plurality of HRTF timbres from different subjects to obtain a plurality of HRTF timbres; selecting an HRTF timbre and combining the selected HRTF timbre with the baseline HRTF to synthesise an HRTF. By ensuring the same baseline HRTF is used when synthesising an HRTF as when preparing the HRTF timbre, a full HRTF can be accurately reconstructed.

Preferably, removing spectral notches comprises removing pinnae notches from the HRTF. The pinnae notches provide a significant component of the localisation perception information in an HRTF so removing them leaves timbral changes in the resulting processed spectrum.

Preferably removing spectral notches comprises identifying notch boundaries; removing samples within the notch boundaries; re-interpolating the HRTF measurement between the notch boundaries. In this way, the notches are removed but a complete transfer function is retained, preserving the shape of the underlying spectrum.

Preferably identifying notch boundaries comprises: determining a centre frequency of each notch; inverting the magnitude spectrum and performing a peak detection algorithm to determine the left and right boundaries of the notch. There are numerous peak detection algorithms available and inverting the spectrum in this way allows for an efficient way to identify the notch boundaries to be used when selecting samples to remove.

Preferably determining a centre frequency of each notch comprises: determining an approximate centre frequency using a single processing method based on Linear Predictive Coding; identifying local minima to determine the centre frequency of each notch. This provides a computationally efficiency and accurate method of determining the centre frequency of each notch.

Preferably the HRTF comprises a diffuse field equalised HRTF. Preferably the HRTFs comprise free-field compensated HRTFs. An input HRTF may be preprocessed by performing one or more of the following: (1) removing unwanted floor reflections by applying a unity pad followed by a half-Hann closing window; (2) performing diffuse field equalisation; (3) performing loudness normalisation. This ensures consistent HRTFs across subjects and measurement angles to be processed to extract timbre. The use of diffuse field equalisation also ensure that's any common EQ between subject HRTFs is removed and only the subject-specific timbral component is captured.

Preferably the method comprises processing the HRTF to remove phase information to remove interaural time delay, ITD, features. In this way, localisation information related to the difference between the ears response is removed. Each HRTF may be a mono magnitude spectra, in which ITD and stereo cues are removed. This removes spatialisation cues and allows each HRTF from each ear to be processed in the same way.

The HRTF processed to remove the spectral notches is referred to as the HRTF' (HRTF primed). The average HRTF' may be referred to herein as a template HRTF providing an average response across a plurality of subjects. Preferably it comprises averaging over at least 10 subjects, preferably at least 100 subjects.

Preferably using the HRTF timbre to synthesis an HRTF comprises obtaining an input HRTF; combining the HRTF timbre into the input HRTF. Combining the HRTF timbre into the input HRTF may comprise replacing a corresponding timbre component of the input HRTF with the HRTF timbre.

In some examples the input HRTF may comprise a template HRTF defining an average response. Preferably the input HRTF comprises the baseline HRTF. The method may comprise adding the HRTF timbre to the template HRTF. The Template HRTF may comprise an HRTF'. The method may further comprising adding or adjusting localisation perception features in the input HRFT, for example adding or adjusting pinnae notches.

In some examples the method may comprise adding localisation features to the HRTF timbre and preferably the template HRTF to synthesis a full HRTF incorporating the HRTF timbre.

Preferably the method comprises calculating a plurality of HRTF timbres from different subjects; storing the plurality of HRTF timbres; selecting an HRTF timbre from the plurality of stored HRTF timbres and using the selected HRTF timbre to synthesise an HRTF for a user. In this way the timbre component of an HRTF may be adjusted based on one of the stored HRTF timbres in order to vary the timbral characteristics of a synthesised HRTF.

Preferably the method is applied within a video gaming system. The method may comprise storing the plurality of HRTF timbres in the memory of a video gaming system; and applying the synthesised HRTF to generate binaural audio during gameplay. In this way, a user can select an HRTF timbre component that provides the most realistic and immersive binaural audio experience.

The method may comprise receiving a user selection of an HRTF timbre through a user device. Where the method is applied with a video gaming system, the user input may be received through a controller of the video gaming system, possibly to adjust one or more input elements of a graphical user interface. The method may comprise a HRTF calibration routine in which the user can select a personalised HRTF timbre to include in the HRTF. This may comprise playing audio during selection of HRTF timbre components to adjust the output audio.

Preferably, selecting an HRTF comprises: applying a synthesised HRTF comprising an HRTF timbre to an audio signal to provide a binaural audio output and outputting the binaural audio to the user; varying the HRTF timbre of the synthesised HRTF applied to the audio signal to vary the binaural audio output to the user; receiving a user selection and selecting the HRTF, comprising HRTF timbre, currently being applied when the user selection is received. In this way, the user may experience the varying effect on the output audio of varying the HRTF timbre in real time, so as to facilitate selection of the optimum HRTF.

In some examples, the method comprises preparing and storing a plurality of HRTF timbres for use at runtime. Preferably selecting an HRTF comprises receiving a user selection of a plurality of HRTF timbres through a user input device; combining the selected HRTFs timbres using averaging or interpolation to create a combined HRTF timbre; synthesising an HRTF using the combined HRTF timbre. In this way, a reduced number of HRTF timbres need to be stored in memory, since further HRTF timbres can be generated through combination of stored HRTF timbres, providing a greater degree of personalisation.

In some examples, the method selecting an HRTF timbre comprises: receiving user physiological data and selecting an HRTF timbre based on the received user physiological data. Physiological data may comprise one or more of: data encoding measurements of the user's head size or shape; data encoding measurements of the user's shoulder size or shape; data encoding measurements of the user's torso size or shape; data encoding measurements of the user's ear size or shape; an image of the subject's ears. In this way, rather than the selection of HRTF timbre being made based on user assessment of the binaural audio output, the timbre may be directly selected based on the patient's anatomy.

Selecting an HRTF timbre based on the received user physiological data comprises: inputting the physiological data into a machine learning model trained to map the input physiological data to a stored HRTF timbre. The machine learning model may be trained based on input physiological data labelled with a timbre class label, indicating which of a plurality of possible HRTF timbres the user's HRTF timbre is closest to. The plurality of possible HRTF timbres may correspond to the HRTF timbres stored for use in synthesis. The machine learning model is trained to classify the input physiological data into one of the possible timbre classes. In this way, at run time, a user can input physiological data in a manual or automated fashion and the trained machine learning model will map this to an HRTF time from the plurality of possible HRTF timbres that most closely matches the user's true HRTF timbre.

In some examples using the HRTF timbre to synthesis an HRTF comprises: providing a training dataset comprising a plurality of timbre features, each timbre feature comprising an HRTF timbre prepared by processing the HRTF of a subject at a particular measurement angle; training an autoencoder model, that is conditioned using the measurement angle, to encode an input timbre feature into a latent vector space and reconstruct the input timbre feature from the latent vector space, thereby learning a latent vector space that encodes timbre information independent of the measurement angle, such that the latent vector space is usable to synthesise an HRTF timbre.

The invention allows for the learning of a latent vector space, also referred to herein as a timbre vector space, that encodes the timbre information of any input processed HRTF, independently of localisation information. The timbre vector space and decoder can then be used as an HRTF timbre synthesiser to generate a timbre component to be added to any synthesised HRTF. Since the learned timbre space captures the variation in this timbre component in a reduced vector space it allows for efficient storage of a vast range of possible HRTF timbre components that can then be applied to a synthesised HRTF. This is particularly beneficial for example, in the context of video games where computational efficiency in run time audio generation is particularly important given the significant competing resources on memory and processing.

The encoding of timbre in a reduced dimensional vector space also facilitates user tuning of the timbre component of a simulated HRTF. For example, a user can select a vector from the timbre vector space, or advantageously a further dimension reduced vector space, using user input device to select a timbre component that provides optimum results.

Preferably the method uses an adversarial training objective in which the autoencoder model is trained to learn a latent space that is predictive of the subject (or specific subject's ear) that the HRTF was measured from, while encouraging it to learn a latent space that is non predictive of measurement angle. In this way a latent space is learned that allows for reconstruction of a timbre feature of a subject, while discarding measurement angle information.

In preferable examples, the timbre features are each labelled with a subject label indicating the subject from which the HRTF was measured and a measurement angle label indicating a measurement angle of the HRTF; wherein the autoencoder model comprises: an encoder for encoding an input timbre feature into a latent vector space and a decoder for decoding from the latent vector space to reconstruct the timbre feature; a subject classifier arranged to take a vector from the latent vector space as input and predict the subject label; a measurement angle classifier arranged to take a vector from the latent vector space as input and predict the measurement angle label; the method further comprising: training the machine learning model using the training dataset such that the autoencoder is trained to reconstruct the timbre feature through the latent vector space, while minimising a classification error of the timbre classifier and maximising a classification error of the measurement angle classifier, thereby learning a latent vector space that encodes timbre information independently of the measurement angle.

The use of this model architecture and learning objective provides particularly accurate reconstruction of timbral features of existing HRTFs, as well as the possibility of synthesising novel HRTF timbre. It allows for improved disentangling of measurement angle and timbre information, allowing for independent timbre control when synthesising novel features.

Preferably the HRTF measured from each subject's ear is treated individually and is encoded in a separate timbre feature. The "subject label" therefore corresponds to the specific ear of the subject from which the original HRTF was measured in these examples. It is also referred to as the "timbre label" herein.

Preferably the decoder takes the measurement angle label as input so as to reconstruct the input timbre feature associated with a particular input measurement angle. More specifically, the latent vector space encodes timbral information such that the single vector can be used to reconstruct the timbral component along any measurement direction by feeding the appropriate angle to the decoder with the vector from the latent space encoding the timbre feature.

The measurement angle label and/or the subject label may be in a one-hot encoded format. The measurement angle label and/or the subject label may each comprise a vector or matrix with a number of elements corresponding to the total number of possible values of the measurement angle and the total number of subjects (or subject's ears) that the HRTF were measured at (i.e. the total number of classes).

In some examples, the timbre feature comprises a one dimensional vector encoding the magnitude changes of the timbre component at a single measurement angle. In particular the number of elements of the vector corresponding to the number of frequency values at which the timbre component is sampled. The measurement angle label in this case may provide a specific angle comprising an azimuth and elevation angle, for example it may be encoded as a 2-dimensional matrix providing all possible measurement angles.

In some examples, each timbre feature comprises a 2D matrix representing comprising the processed HRTF data at a specific azimuth angle and all elevation angles; wherein the measurement angle label comprises the azimuth angle and the measurement angle classifier is configured to predict the measurement angle label using a vector from the latent vector space as input, such that during training the model learns to encode timbre information in the latent vector space and discard azimuth information. In this way, all azimuthal information is discarded from the latent vector space but some elevation information may be retained. This provides a less-computationally intensive method compared to training based on timbre features at a single measurement angle, while still discarding the majority of the significant localisation information from the timbre space. In these examples, each timbre feature may be a [n × m] matrix, where n corresponds to the number of frequency bins and m the number of elevation angles. That is, in some examples, a single timbre feature is constructed as a 2D matrix that represents a subject's Timbre data at all elevations for a single azimuth.

Preferably the autoencoder model comprises a convolutional encoder and a convolutional decoder, trained using a mean squared error as the reconstruction loss. This has been shown to provide particularly accurate reconstruction results. Preferably the subject classifier comprises a fully connected classification model trained to minimise cross entropy loss and the measurement angle classifier comprises a fully connected classification model trained to maximise cross entropy loss.

Preferably the total loss for optimizing the model is given by the following equation:

$$\text{Loss} = L_{AE} + L_{TC} - L_{AD}$$

where, $L_{AE}$ denotes the reconstruction loss, i.e. the mean square error between the Decoder's output and the Encoder's input, $L_{TC}$ denotes the cross entropy between the timbre prediction and labels and $L_{AD}$ denotes the cross entropy between the azimuth prediction and labels. The multi-task training objective involves minimising $L_{AE}$ and $L_{TC}$ while maximizing $L_{AD}$. This ensures that no localization information is captured in the latent vector space.

In another aspect of the invention there is provided a computer-implemented method of synthesising a head-related transfer function, HRTF, the method comprising: providing an HRTF timbre synthesiser comprising the latent vector space and decoder of the autoencoder model trained according to a method of the first aspect of the invention; selecting a vector from the latent vector space and a measurement angle; inputting the selected vector and measurement angle into the decoder to output a timbre feature at the selected measurement angle; generating an HRTF using the output timbre feature. In this way an HRTF can be synthesised in which a synthesised timbre component can be applied, without affecting the localisation perception information within the HRTF. The latent vector space encodes a wide range of possible HRTF timbre characteristics, allowing the timbre of a synthesised HRTF to be tuned to a particular subject.

Preferably the method further comprises inputting a plurality of measurement angles with the selected vector from the latent vector space and feeding to the decoder to output a plurality of timbre features, each at a different measurement angle; reconstructing a full HRTF timbre component from the plurality timbre features, the full HRTF timbre component comprising the timbre features across the full measurement range; generating an HRTF using the full timbre component. In this way a complete HRTF can be constructed, since the latent vector space includes timbre across all measurement angles.

In some examples generating an HRTF comprises: obtaining an input HRTF; combining the timbre feature into the input HRTF. In some examples combining the timbre feature into the input HRTF comprises replacing the timbre component of the input HRTF with the synthesised timbre feature. The input HRTF may be a measured HRTF, an average HRTF comprising an average HRTF magnitude spectrum averaged across a plurality of subjects, or an at least partially synthesised HRTF. In some examples the input HRTF maybe a template HRTF, representing an average response, for example the template HRTF may preferably be the average HRTF', to which features can be added or tuned to personalise the HRTF to a subject. For example a full HRTF may be constructed by inputting the HRTF' then adding the synthesised timbre component and localisation perception features, where the localisation perception features preferably comprise pinnae notches and ITD. This allows for prior art methods of HRTF synthesis focussing on localisation features to be applied to timbre features.

The method may comprise adding localisation features, for example pinnae notches, to an output timbre feature to construct an HRTF. In particular, the timbre feature (i.e. the timbre component of an HRTF generated according to the present invention) may be used as a starting point to which localisation features are then added and tuned.

In some examples selecting the vector from the latent vector space comprises receiving a user input and selecting the vector from latent space based on the user input. In particular, because the latent space defines timbre by a reduced number of parameters, a user input may be used to select the parameters (i.e. select a vector from the latent space, for example by selecting values of its elements).

In some examples selecting the vector from the latent vector space comprises: providing a reduced vector space, formed by performing dimensionality reduction on the latent vector space; receiving a user selection of a vector within the reduced vector space with a user input. In this way, the number of parameters defining timbre is reduced further to a manageable number of parameters that may be selected by a user. The method may comprise mapping a vector from the reduced vector space to a corresponding vector in the latent vector space and inserting the vector from the latent space into the decoder to output the timbre component. Performing dimensionality reduction on the latent vector space may comprise using T-SNE or PCA.

The user input may be provided by a controller or user interface (e.g. a GUI). The reduced vector space may have 1 dimension and the user input comprises a slider on a graphical user interface for selecting a value. The reduced vector space may have 2 dimension and the user input comprises a draggable point on a 2D graph of a graphical user interface or two sliders on a graphical user interface for selecting a value of each dimension. The reduced vector space may have 3 dimension and the user input comprises a physical controller where pan, tilt and roll of the controller provide selection of a value of each dimension. The reduced vector space may have 6 dimensions and the user input comprises a controller where pan, tilt and roll of the controller and translation of the controller in the x, y and z dimensions provide selection of the value of each dimension.

In another aspect of the invention there is provided a computer-implemented method of synthesising a personalised HRTF the method comprising: storing a plurality of HRTF timbres, each HRTF timbre comprising a measured or synthesised timbre component of an HRTF; receiving a selection of a specific HRTF timbre; synthesising an HRTF based on the selected HRTF timbre. Preferably the HRTF timbre comprises an HRTF that has been processed to remove spectral notches from the HRTF. Preferably the HRTF timbre comprises an HRTF that has been processed to remove spectral notches from the HRTF and then had an HRTF' subtracted, the HRTF' comprising an HRTF with the spectral notches removed. The selection of HRTF timbre may be made by any method described in relation to another aspect of the invention. Preferably the method comprises storing the plurality of HRTF timbres in the memory of a video gaming system, and applying the synthesised HRTF to output audio signals during gameplay.

In a further aspect there is provided a computer program comprising instructions that, when executed by a computer cause the computer to perform a method defined above or any appended claim. In a further aspect there is provided a system comprising a processor configured to perform a method defined above or in any appended claim.

## BRIEF DESCRIPTION OF DRAWINGS

Embodiments of the invention are described below, by way of example only, with reference to the accompanying drawings, in which:

Fig. 1A illustrates an example of an HRTF from a particular subject's ear at a particular measurement direction;

Fig. 1B illustrates an example of a notch identification and removal routine applied to the HRTF of Figure 1A;

Fig. 1C illustrates the HRTF of Figure 1 after processing to remove spectral notches, referred to HRTF';

Fig. 1D illustrates the average HRTF', comprising an average of the HRTF's measured from a plurality of subjects at the same measurement angle as Figure 1A;

Fig. 1E illustrates the timbre component of the HRTF of Figure 1A, calculated by subtracting the average HRTF' of Figure 1D from the HRTF' of Figure 1C;

Fig. 2 illustrates a method of extracting the timbre component of an HRTF and optionally using the HRTF timbre to synthesise an HRTF;

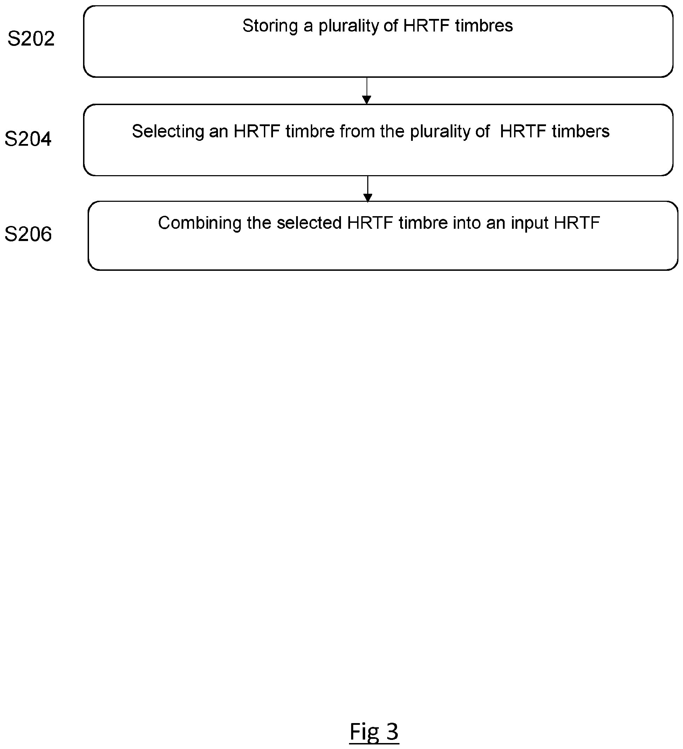

Fig. 3 illustrates a method of HRTF personalisation according to the present invention;

Fig. 4 illustrates an autoencoder model architecture and training procedure according to the present invention;

Fig. 5 illustrates a method of training a machine learning model for use in synthesis of a head-related transfer function according to the present invention;

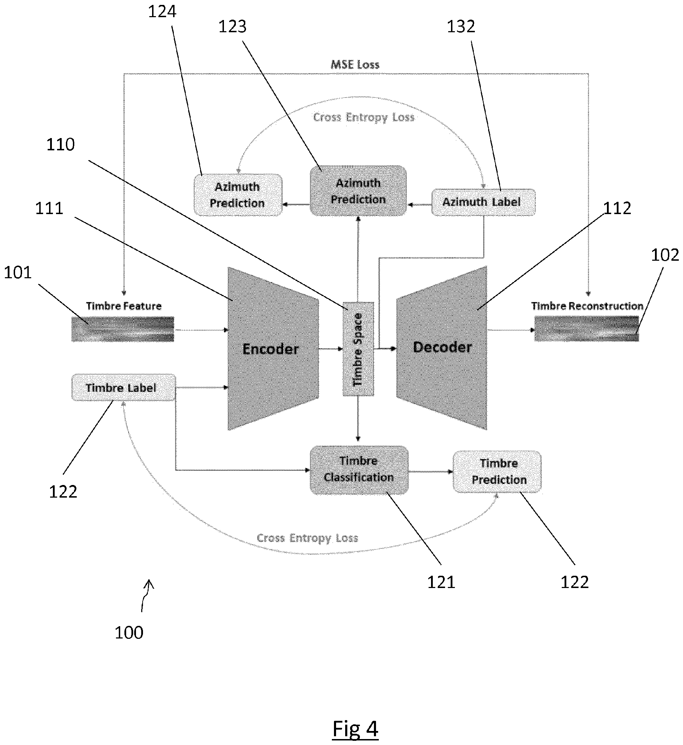

Fig. 4 illustrates a method of synthesising a head-related transfer function according to the present invention;

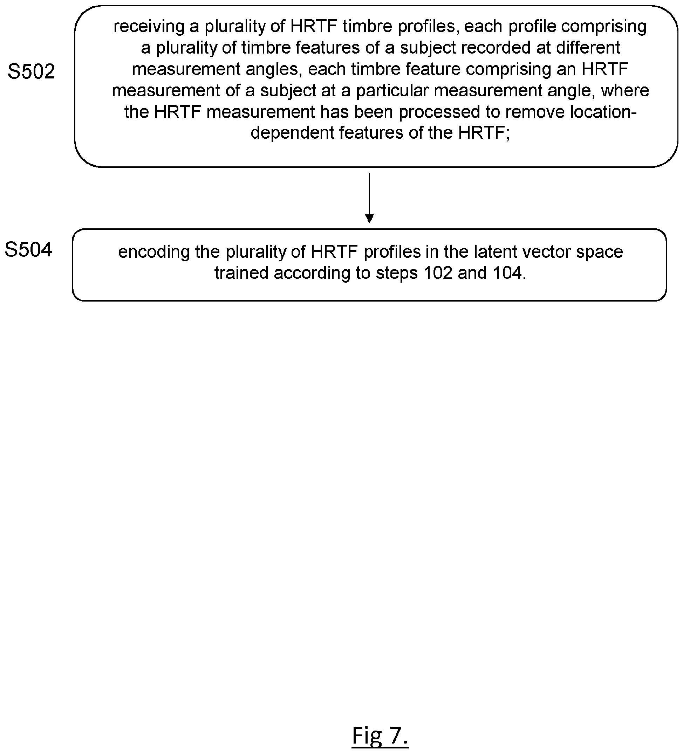

Fig. 7 illustrates a method of storing a plurality of head-related transfer functions according to the present invention.

## DETAILED DESCRIPTION

Head-Related Transfer Functions (HRTFs) are frequency and time-dependent signal processing filters that represent the stereo anechoic acoustic transfer function between a positional sound source and a listener's ears. In the time domain, they are referred to as Head-Related Impulse Responses (HRIRs). An individual's HRTF is commonly measured at many angles around their head, referenced with respect to azimuth (rotation around the horizontal axis) and elevation. The response of left and right ears differ and are both encoded into the full HRTF.

HRTFs provide the listener with spatial cues that help them to localize sounds in 3D space. These cues include time and level differences between ears (primarily associated with lateral localization) and peaks/notches within the frequency response of each ear (primarily associated with elevatory localization). By convolving an audio signal with an HRTF and presenting the result directly to a listener's ears (usually via headphones but also potentially via loud speakers with additional signal processing considerations), a source may be simulated as if coming from the direction in which the HRTF was measured. HRTFs are a crucial part of binaural acoustic applications for simulating immersive acoustic experiences in augmented reality (AR), virtual reality (VR), gaming and entertainment applications.

Since each individual has a unique HRTF, in order to provide accurate binaural audio in applications such as video games it is necessary to carefully select an HRTF to ensure it is as close as possible to user's true HRTF. To achieve this it is necessary to simulate a personalised HRTF to be applied to audio signals. Many methods have been explored for this, such as adjusting known features in an input or base HRTF based on user feedback or based on physiological features of the user, for example based on measurements of the head and ear or an image of the user's ear.

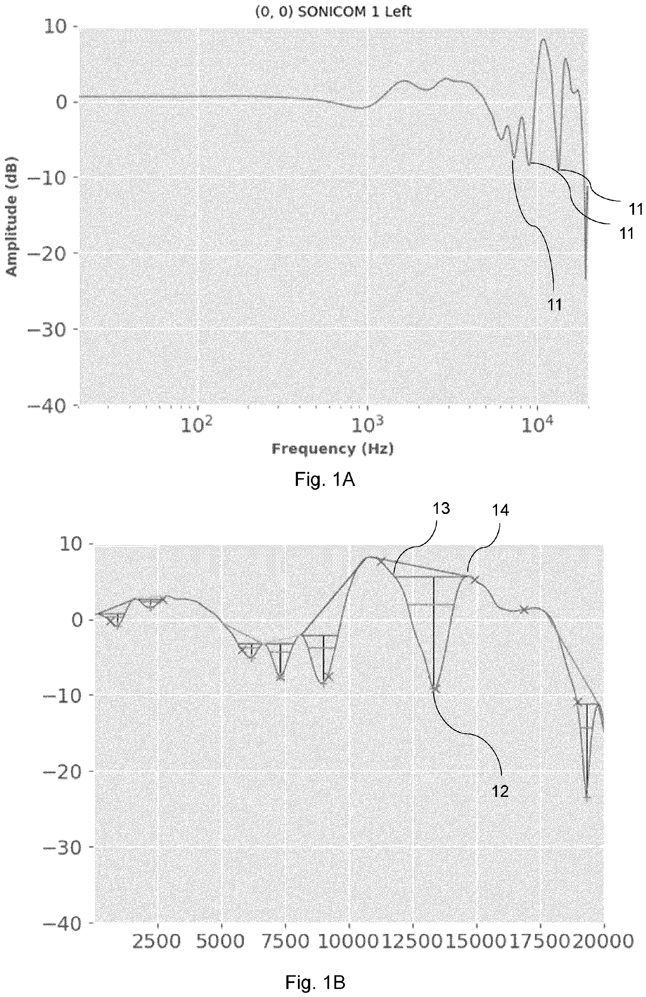

These methods have until now focussed on the prominent known features in the HRTF that are responsible for the majority of localisation perception. These include the interaural time delay (ITD), related to the size and shape of the user's head and the distance between the user's ears and the interaural level distance (ILD) related to the differing frequency-dependent sound sensitivity between a user's ears, the ITD and ILD primarily associated with lateral localisation. The features further include the spectral notches 11, or "pinnae notches" as shown in the HRTF of Figure 1A, related to the user's pinna features of the ear, which are primarily responsible for elevation localisation.

There has been significant progress HRTF simulation techniques focussed on simulating and personalising these localisation related features of the HRTF for use in providing spatial audio. However, HRTFs have further features associated with perceptual attributes other than localisation. This remaining component of the HRTF may be defined as the timbre component, which is responsible for a change in sound coloration when an HRTF is applied to an audio signal. Although there is a degree of spatial dependency in the HRTF timbre component, it does provide any spatial perception cues. The timbre component may be defined as a set of smooth (low order) filters that vary over the sphere (again, in a smooth fashion). These filters will provide small magnitude changes (approximately <10dB) compared to spectral notches where the magnitude changes could be > - 50dB.

Every HRTF is characterised by a unique timbral quality that provides a differing change in sound coloration. It is necessary to include this timbre component, and ideally match a simulated timbre component to a user's true HRTF timbre, in order to provide a full, realistic perception of binaural audio to provide an immersive aural experience. Furthermore is it important to be able to combine this timbre component into an existing HRTF without affecting the localisation information, which ideally should be tuneable separately. Since the timbre component of an HRTF is unique and varies significantly from user to user, there is also a need in HRTF synthesis to store possible timbre components in a storage efficient manner to allow them to be recalled and applied at runtime.

The present invention provides a method of isolating and extracting the timbre component from an HRTF. This can then be stored and used in HRTF synthesis or used to generate alternative HRTF timbre, for example by training a machine learning model on input timbre components to learn a latent vector space encoding timbre information. By storing a database of HRTF timbre components, a user can select a HRTF timbre that provides the most realistic audio for them, thereby improving their experience of AR, VR and video gaming applications.

## Extracting the timbral component of an HRTF

The inventors have identified a specific signal processing routing able to identify and isolate the timbral component of an HRTF (referred to herein as HRTF timbre) from the spatialisation perception components. Thus facilitating personalisation of HRTF timbre in HRTF synthesis and allowing for tuning of HRTF timbre separately to localisation perception.

HRTF timbre, the timbre component of a HRTF, is defined as the inter-subject variations of HRTFs (more specifically diffuse field equalized HRTFs) that are not related to changes in localization perception. This can be thought of as the notchless magnitude deviation from an average response. To extract timbre it is firstly necessary to process an HRTF to remove the localisation-related features.

The process starts with the HRTF measurement, i.e. the complex frequency response, from each ear at each measurement angle. An HRTF measurement at azimuth 0° and elevation angle 0° of a subject is shown in Figure 1A. The HRTF is then processed to remove the spectral notches 11 from the magnitude response of each measurement. This process includes identifying notch boundaries, removing the necessary samples, re-interpolating the response and smoothing the output.

The input HRTF as shown in Figure 1A is preferably a mono magnitude spectra' - an HRTF that has been processed to remove ITD and stereo cues, therefore providing an HRTF for a single ear. If starting from a full HRTF encoding the ITD an ILD, the HRTF is initially processed to remove these features, which are key components of the localisation perception features. This process involves removing phase information to remove ITD and preferably applying loudness normalisation. The HRTF to be processed is preferably a diffuse field equalised HRTF. Input HRTFs may be diffuse field equalised using the method described in Armstrong, Cal et al., "A perceptual evaluation of individual and nonindividual hrtfs: A case study of the sadie ii database," Applied Sciences, vol. 8, no. 11, 2018).

In this example the method uses free-field compensated HRTFs which are preprocessed to remove unwanted floor reflections by applying an initial, for example 75 sample, unity pad followed by a half-Hann closing window, for example of 50 samples in length. The HRTFs may be diffuse field equalised according to the above cited method and then loudness normalised according to EBU R128.

A key aspect of the method is the removal of spectral notches using a notch removal process to remove the pinnae notches. This may be carried out using any suitable prior art method, such as by inverting the signal and using a peak finding algorithm. Figure 1B illustrates a particularly efficient and accurate notch identification process, applied to the HRTF shown in Figure 1A but now shown on a linear rather than log scale. The method involves firstly identifying an approximate central frequency of a notch 12, as shown in figure 1B, inverting the signal and using a peak finding algorithm to identify the left 13 and right 14 bases (or "shoulders") of the notch. The signal between the bases 13, 14 can then be removed and re-interpolated to remove the notch.

In a more specific preferable example, approximate notch frequencies can be identified using a Linear Predictive Coding (LPC), for example based on a signal processing method described in Vikas C. Raykaret al., "Extracting the frequencies of the pinna spectral notches in measured head related impulse responses," The Journal of the Acoustical Society of America, vol. 118, no. 1, pp. 364-374, 07 2005. An appropriate method is also demonstrated in Simone Spagnol and Federico Avanzini, "Frequency estimation of the first pinna notch in head-related transfer functions with a linear anthropometric model," in Proceeedings of the 18th International Conference on Digital Audio Effects 2015.

The notch boundaries (the beginning and end of each notch) may then be identified by identifying local neighbouring minima (the actual notch frequencies), inverting the spectrum and using a peak prominence detection algorithm (e.g. scipy.peak prominences (https://docs.scipy.org/doc/scipy) which returns the left and right bases of each peak directly. The method can be fine-tuned by alternatively calculating various notch width frequencies (e.g. scipy.peak prominences to better define the start and end of the notches for a given dataset. The method then involves removing samples (i.e. set the sample value to NaN) from the frequency response data that have been identified as being part of a notch and reinterpolate the response over these samples with a pchip algorithm. The method may involve only removing a portion of the samples from the centre of the notch, which can help aim in preserving the underlying shape of the transfer function. In particular the method may involve removing 85% to 100% of the samples, centred on the central notch frequency.

In some examples a simple smoothing routine may then be used to remove any discrepancies from the notch removal process and better isolate the overall shape of the signal. This processed HRTF, with the spectral notches removed, is referred to herein as a subject's HRTF', corresponding to the HRTF with all significant localisation-related features removed. The HRTF' output after processing the HRTF of Figure 1A is shown in Figure C.

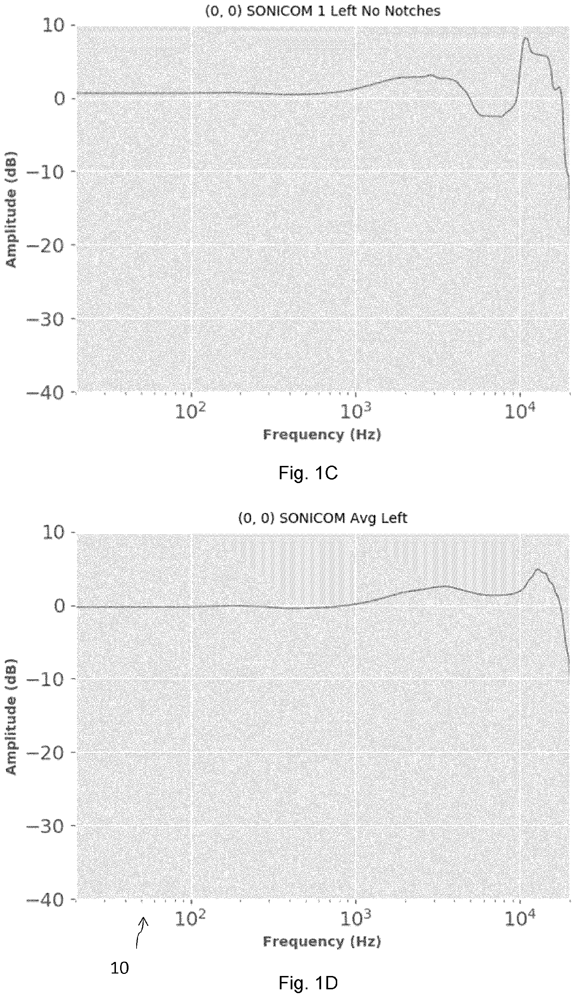

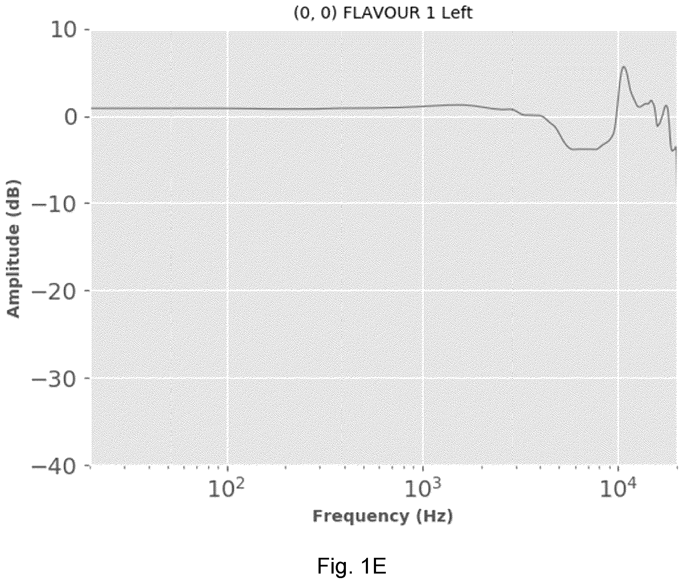

The method then involves calculating the average HRTF' at each angle (the average or "template" HRTF), referred to as the Average Response'. This is the average HRTF' calculated over a plurality of subjects, in this case all ears in the Sonicon HRTF database. An average HRTF' is shown in Figure 1D. Finally a subject's HRTF timbre for a particular measurement angle is calculated by subtracting the average HRTF' at that measurement angle (as shown in Figure 1D) from the processed notchless HRTF (HRTF') for that measurement angle. Figure 1E illustrated an example of a subject's HRTF timbre (also referred to herein as the timbre component of an HRTF) at a particular measurement angle.

Although in this example, the average HRTF' is subtracted to provide the HRTF timbre. In other examples, an alternative "baseline HRTF" may be subtracted to provide HRTF timbre. More generally, the method involves subtracting a baseline HRTF, where the baseline HRTF represents a generalised response component - i.e. a component of the (notch-removed) HRTF that is a generalised or common component of the HRTFs, such that the remainder is the subject dependent variations in HRTF timbre. In other examples it may have a different form, such as a constant. The key point is that all HRTF timbres are extracted relative to a common baseline and the same baseline is then used in HRTF synthesis to construct a full HRTF. This baseline HRTF is subtracted from every subjects HRTF' to give their individual HRTF timbre and baseline HRTF then forms the basis of HRTF synthesis - with a selected HRTF timbre, and spatial perception features such as the spectral notches, combined with the baseline HRTF to synthesise a personalised HRTF.

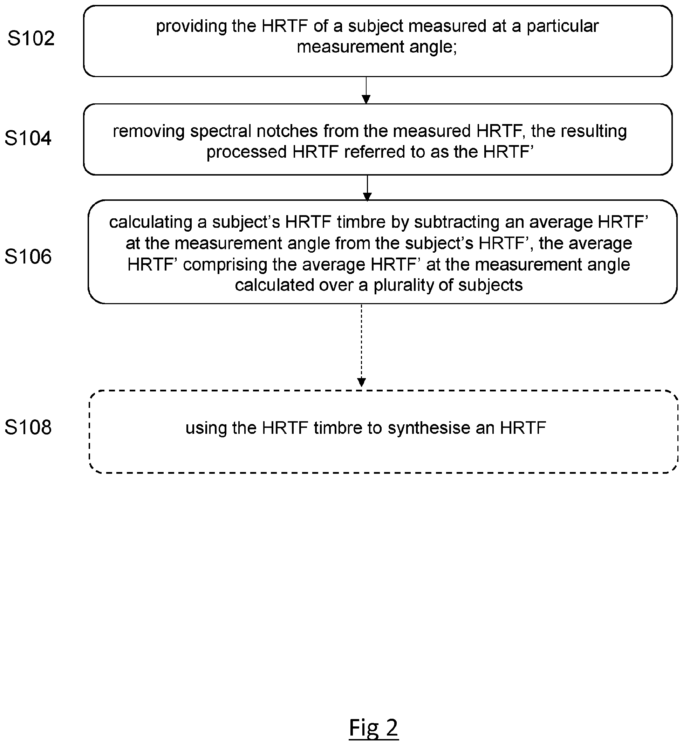

A method of extracting a timbre component is shown in Figure 2 and comprises a first step S102 of providing the HRTF of a subject measured at a particular measurement angle; a second step S104 of removing spectral notches from the measured HRTF, the resulting processed HRTF referred to as the HRTF'; and a third step S106 of calculating a subject's HRTF timbre by subtracting an average HRTF' at the measurement angle from the subject's HRTF', the average HRTF' comprising the average HRTF' at the measurement angle calculated over a plurality of subjects. The HRTF timbre can subsequently be stored and applied to synthesise an HRTF as shown in optional step S108.

## Use of HRTF timbre in HRTF synthesis and personalisation

The extracted HRTF encodes the subject's specific timbre response, independently of localisation perception. This may be stored and applied in HRTF synthesis, allowing the timbre of an HRTF to be tuned without influencing localisation perception. The extracted HRTF component may be used in HRTF synthesis in a number of different ways.

There are a number of known methods of HRTF synthesis and personalisation. These often start from a template or base HRTF (for example an average HRTF' - an averaged magnitude spectrum over a plurality of HRTFs) and make adjustments to the features known to be associated with localisation perception, in particular the ITD, ILD and pinnae notches. For example, methods may involve replacing or adding to sections of the template HRTF with corresponding sections generated through HRTF synthesis. Methods may involve predicting the location and size of certain HRTF features, such as the pinnae notches, and applying these to the base/template HRTF. In some examples, method may adjust parameters associated with the localisation perception features in response to user feedback.

As described above, the present method allows corresponding HRTF synthesis and personalisation methods to be applied to the timbre component of an HRTF - the features not associated with localisation, but instead with a perception of the audio, that must be included to provide the user with the closest replication of how they experience audio. Although there is some spatial dependency to the HRTF timbre component, it is not responsible for any perceived spatial cues, such as those provided by the other prominent features of the HRTF, such as the pinnae notches, ILD and ITD. This presents technical challenges in synthesising and personalising HRTF timbre because unlike with the localisation features, where there are clear parameters that can be adjusted such as the size and position of the pinnae notches, the timbre component is less well understood and does not have a manageable number of readily identifiable parameters that can be adjusted to tune the timbre. The present invention allows for HRTF timbre to be tuned within HRTF synthesis.

In a simple example, the HRTF timbre may simply be added to an input HRTF. For example, the timbre component of an existing full HRTF may be removed and replaced with the extracted and stored Timbre component, thereby tuning the experience of audio provided by the HRTF without affecting localisation. Alternatively synthesis could start from a template of base HRTF. One example of a template HRTF is the average HRTF'. The HRTF timbre can then be added to this to add the timbre spectrum to the baseline HRTF. Localisation features can further be added to construct a full HRTF.

More advantageously the method may be extended by allowing tuning of HRTF timbre - i.e. selection of a specific HRTF timbre to be included in an HRTF. This preferably involves storing a plurality of HRTF timbres, and allowing a selection of an HRTF timbre and an HRTF synthesised using the HRTF timbre. Each HRTF timbre may be extracted using the method above from a different HRTF and stored in the memory. As will be described below, in addition to measured HRTF timbres extracted from the HRTF of subjects, the plurality of HRTFs timbres could comprise synthesised "artificial" HRTF timbres generated based on real, measured HRTF timbres, for example using a machine learning model according to the process described below.

The invention finds particular application in video game systems, and other applications involving virtual environments and binaural audio, where there is an ongoing technical challenge in providing an HRTF personalised to a user. Using the present invention, a plurality of HRTF timbres (i.e. a plurality of possible "timbre profiles") may be stored in the memory of a video game system. The system may provide an HRTF personalisation routine in which the user can select the HRTF timbre that provides the optimum binaural audio for them. The corresponding HRTF timbre is then used to synthesise an HRTF, i.e. construct an HRTF comprising the selected HRTF timbre. The synthesised is then applied to audio signal to generate binaural audio during gameplay.

In some examples, the user may be able to select multiple stored HRTF timbres which are combined and then the combined HRTF timbre used to synthesise an HRTF. For example, a plurality of HRTF timbre components, extracted according to the method above may be stored for use at runtime. At runtime, a user may make a selection of two or more HRTF timbre that are then combined, for example by averaging or interpolation, to provide a combined HRTF timbre. The combined HRTF timbre is then used to construct an HRTF for use at run time. In this way, rather than storing all possible HRTF timbre components that could be used at run time, some options may be created based on combinations of a more limited number of stored HRTF timbres. For example, linear combinations of HRTF timbres may be used to give a wide range of timbre profiles for use during runtime.

The selection of the HRTF timbre may be used using a user input device such as a controller, eye tracker or other input device known in the art. To facilitate selection of the optimum HRTF timbre for the user, the method may involve outputting audio while different HRTF timbres are applied, allowing the user to select the HRTF timbre that provides the best binaural audio effect. This may involve automatically cycling through HRTF timbre options, that are applied within a synthesised HRTF to an audio signal to output binaural audio to the user. Alternatively a user may be able to switch between different HRTF timbres with a user input device while listening to the output audio to facilitate selection. The user may be able to vary one or more parameters of the HRTF timbre with a user input device. A method for doing so involves using a trained latent vector space encoding the timbre, as described below.

### Prediction of HRTF timbre based on physiological data

In other examples, rather than relying on user selection of the required HRTF timbre, the timbre may be directly predicted based on the input user physiological data. Since HRTF timbre varied with the size and shape of the user's head, shoulders, torso and ears, by inputting data encoding information on these parameters, this may be mapped to a suitable HRTF timbre for use in synthesising a personalised HRTF. For example, the method may involve training a machine learning model to predict the HRTF timbre component based on input data encoding physiological information relating to one or more of these user physical features. At run time, for example during an HRTF calibration routine of a video gaming system, the input data may be input to the trained model to select an appropriate HRTF timbre. For example the video gaming system may store a plurality of different possible HRTF timbres and the machine learning model maps in the input physiological data to the HRTF timbre that is closest to that required. This may be achieved by training a machine learning model on input physiological data that has been labelled with an timbre/subject label indicating an HRTF timbe out of a set of possible HRTF timbres that is closest to the subject's true HRTF timbre. For example, the video gaming system may store 100 possible HRTF timbres. During training, the model learns to map input physiological data to the closest timbre - i.e. classify into one of the 100 possible timbre classes. At runtime the trained model is used to select one of the 100 possible timbre classes for the user. Other methods for generating timbre based on physiological measurement are described below.

### Machine learning method for leaning a latent vector space encoding timbre

Another possible method of using the extracted HRTF timbre is to train a machine learning model, using the extracted timbre components of HRTF, to learn a latent vector space encoding timbre information. This can then be used for downstream HRTF synthesis and personalisation. An example of a machine learning model for learning the timbre vector space is illustrated in Figure 4 and, as will be described in more detail below, it comprises an autoencoder that is trained to reconstruct input HRTF timbre components, whilst being conditioned on the measurement angle, so that the latent vector space (referred to herein interchangeably as the timbre vector space or timbre space) is trained to encode only timbre information, and not measurement angle information. This is what allows the timbre component to be applied in HRTF synthesis or personalisation, without affecting the spatial cues of an input or base HRTF to which it is applied.

The training data set comprises a plurality of HRTF timbre components, i.e. HRTF measurements, each HRTF associated with a particular subject's ear, over a plurality of measurement angles over the sphere, that have been processed according to the procedure described above to extract the timbre component.

The model is trained using "timbre features" - a vector encoding an HRTF timbre component at one or more measurement angles. In some examples of the invention the timbre feature may comprise the timbre component of an HRTF at a single measurement angle, i.e. a one-dimensional vector giving the magnitude value at each frequency interval. In other examples, the timbre feature may comprise the timbre component of a subject's HRTF at a plurality of measurement angles. For example, it may be a matrix encoding the magnitude values at each frequency interval for a range of measurement angles.

In the present example the timbre features on which the model is trained comprise a subject's HRTF timbre component at a plurality of elevation angles for a single azimuth. It is therefore a 2D matrix with a shape comprising [Number of frequency bins x number of elevations]. In the present example the HRTF timbe components comprise 257 frequency bins from 0 to 24kHz and there are 17 elevation measurement angles in total from -60° to 60°. Therefore each timbe feature comprises a [257 × 17] matrix that represents a subject's Timbre' data at all elevations for a single azimuth. The model 100 is trained on a batch of timbre features, as explained in more detail below.

Each timbre feature is supplemented by subject label 122 (also referred to as a timbre label 122, as shown in figure 1) and a measurement angle label 132. In the present example in which the timbre features 101 comprise the timbre components over all elevations for a single azimuth, the measurement angle label 132 comprises an azimuth label, indicating the azimuth measurement angle. However, in examples where the timbre features comprise the timbre component at a single measurement angle, the measurement angle label may indicate a specific single measurement angle (i.e. the specific azimuth and elevation angles).

In the present example the subject (timbre) label 122 and the measurement angle (azimuth) label 132 are each in a one-hot encoded format, i.e. a single one dimensional vector with a number of elements corresponding to the total number of classes. In this example there are 200 subjects with each ear considered individually giving 400 separate HRTFs, so the subject label is a 400-element vector with one element set to 1 to indicate the subject class and all other elements set to 0. Similarly, the azimuth label is a 48-element vector. Azimuths are encoded in ascending order such that index 0 corresponds to -172.5°, index 1 corresponds to -165° and so on. The right ear HRTFs are flipped so that they are aligned with the left ear HRTFs.

The model architecture is shown in Figure 2. The model 100 comprises a conditional autoencoder model 100. The autoencoder model 100 comprises an encoder 111 for encoding an input timbre feature 101 into a latent vector space 110 (within the "timbre space") and a decoder 112 for decoding from the latent vector space 110 to reconstruct the timbre feature 102. The model further comprises a subject classifier 121 (or equivalently "timbre classifier" / timbre classification module) arranged to take a vector from the latent vector space 110 as input and output a predicted subject class 122. The model further comprises a measurement angle classifier 123 (in this example an azimuth prediction/discrimination module) arranged to take a vector from the latent vector space 123 as input and output a predicted measurement angle class (in this example the azimuth class).

The encoder-decoder 111, 112 is trained to reconstruct the input timbre feature 101 using an appropriate reconstruction loss, in this example mean squared error (MSE). The subject classifier 112 is trained so as to minimise the classification error in predicting a subject class based on the learned timbre space (i.e. the encoding of the input timbre feature). In this way the encoder is trained to learn a latent vector space 110 that is predictive of the subject from which the timbre component was measured so that it groups measurements from the same subject together. In this example a cross entropy (CE) loss is used. The measurement angle classifier 123 (measurement angle discrimination module) is trained so as to maximise the classification error such that the autoencoder learns a latent space 110 that discards measurement angle information. Again, in this example a cross entropy (CE) loss is used.

The total loss for optimizing the model is shown in Equation 1, below. $L_{AE}$ denotes the reconstruction loss, i.e. the MSE between the Decoder's output and the Encoder's input, $L_{TC}$ denotes the CE between the timbre prediction and labels and LAD denotes the CE between the azimuth prediction and labels. The multi-task training objective involves minimising $L_{AE}$ and $L_{TC}$ while maximizing $L_{AD}$ to make sure that no localization information is captured in the encodings.

$$\text{Loss} = L_{AE} + L_{TC} - L_{AD} \quad (1)$$

In this example the encoder comprises a convolutional encoder and the decoder comprises a convolutional decoder, each comprising multiple convolutional blocks with each followed by the LeakyRELU activation function and a batch normalization layer. It will be appreciated that other encoder/decoder architectures could be used.

The input to the encoder 111 is a batch of timbre features 101 together with their subject label 122. The encoder is trained to encode the input into the learned latent vector space 110, such that the encoder's output is a batch of lower-dimensional latent vectors corresponding to the inputs. These latent vectors 110 are fed to the decoder 112 together with the measurement angle (in this case azimuth) labels 132. The decoder then generates reconstructions of the input timbre features which correspond to the specified measurement angle. While training, the mean square error between the input timbre features 101 and the reconstructed timbre features 102 output by the decoder 112 is calculated.

The latent vectors 110 encoding the input timbre features are also fed into the subject classifier module 121 together with the subject labels 122 and, while training, the cross entropy between the subject label predictions 122 and subject label ground truth is calculated. Similarly, the latent vectors 110 encoding the input timbre features 101 are fed into the measurement angle classifier/discrimination module 123 with the measurement angle labels and, while training, the cross entropy between the measurement angle (in this example, azimuth) predictions and ground truth is calculated.

The result of the training method is a learned latent vector space that encodes timbral information (i.e. non localisation related magnitude change information) of an HRTF, and discards localisation information. The trained latent vector space and decoder can then be used to output a timbre feature (i.e. the timbe component of an HRTF at a particular measurement angle) which can be added to a template or base HRTF without affecting the localisation information. This has the effect of altering the timbre of an audio signal without changing the spatial cues. It can therefore be used to synthesise more complete synthetic HRTFs that provide more realistic and immersive audio.

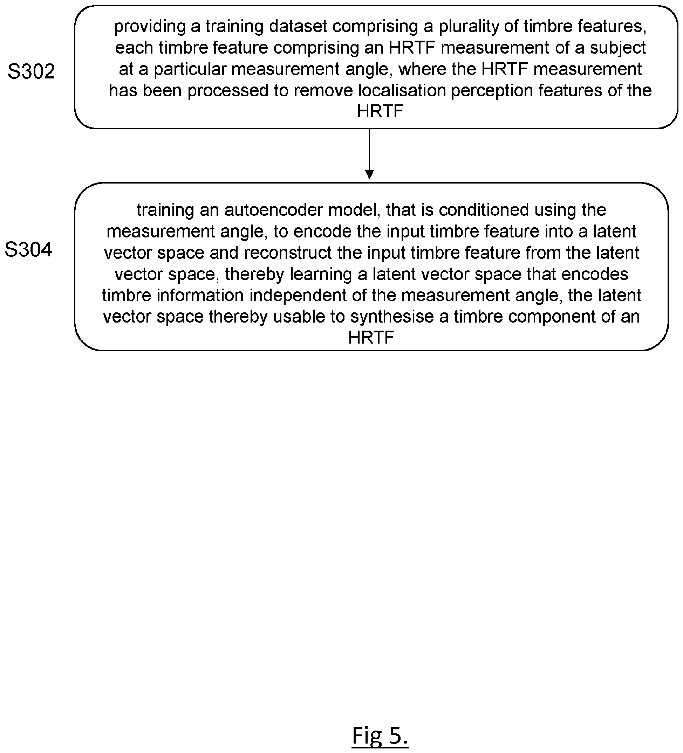

An exemplary method is illustrated in figure 5 and comprises a first step S302 of providing a training dataset comprising a plurality of timbre features, each timbre feature comprising an HRTF measurement of a subject at a particular measurement angle, where the HRTF measurement has been processed to remove localisation perception features of the HRTF. The method comprises a second step S304 of training an autoencoder model, that is conditioned using the measurement angle, to encode the input timbre feature into a latent vector space and reconstruct the input timbre feature from the latent vector space, thereby learning a latent vector space that encodes timbre information independent of the measurement angle, the latent vector space thereby usable to synthesise a timbre component of an HRTF.

## Use of the trained model in HRTF synthesis and personalisation

The inventors have identified that learning a latent vector space to encode the timbral component allows for the timbre to be expressed in terms of a manageable number of parameters facilitating HRTF timbre synthesis and personalisation.

In the most straightforward application of the method, HRTF synthesis involves taking the trained latent vector space 110 and decoder 112, selecting a vector and decoding this with the encoder to generate a timbre feature (i.e. a synthesised timbre component of an HRTF, equivalent to that achieved by the processing method applied to a measure HRTF as described above). This timbre component can then be used to generate a full or partial HRTF by adding this to average template features and/or the localisation features according to a method of the prior art (such as those described in Corentin Guezenoc and Renaud Seguier, "HRTF Individualization: A Survey," arXiv e-prints, p. arXiv:2003.06183, Mar. 2020). In some examples this could involve taking a template HRTF (e.g.. an HRTF averaged over multiple subjects). The timbre component may be added to the template HRTF (e.g. an HRTF') or it may replace the corresponding timbral portion of a full or partial HRTF. In other examples, localisation features may be added to the timbe component generated according to the present method. Since the timbre space does not encode measurement angle information, the generated timbre feature can be applied to an HRTF without affecting the localisation perception features. To synthesise the full HRTF timbre of a subject across all measurement angles each measurement angle can be input into the decoder with a particular vector from the latent vector space 110 to reconstruct the complete HRTF timbre of a subject.

The latent vector or "timbre space" 110 defines a huge range of possible timbre characteristics, beyond those of the real HRTF used to train the model, so can be used as a flexible HRTF timbre synthesiser, and the timbre need not be restricted to the timbre components of the training data. As described above, in some examples the timbre component of a synthesised HRTF can be tuned by a user. For example, when generating an HRTF for a user, for example for use in AR, VR or video game applications, a user interface may be provided allowing a user to select a vector from the latent vector space. For example, a user interface may be provided allowing a user to vary the selected vector from the latent vector space while listening to the effect on an audio signal output to the user. The user input may map to a selection of a vector in the latent vector space. The user may select a vector that provides the best quality audio output, for example providing the most realistic, immersive or pleasing effect of the output audio. The encoding of the timbre in a reduced vector space facilitates ease of tuning and provides a greater range of characteristics compared to selecting from a number of extracted HRTF timbres.

In some examples, the mapping between the user input and the latent vector space may be facilitated and made more intuitive by performing dimensionality reduction on the latent vector space. Although the latent vector space itself provides a reduced dimension encoding of timbre information, there are still a large number of dimensions (64 in the detailed example provided below) which is still a large number of parameters to adjust for a user to find the desired effect. Methods of dimensionality reduction such as PCA or T-SNE may be used to reduce the number of dimensions down to a manageable number of user-adjustable parameters. For example, the method may reduce the vector space to 1 dimension, controllable by a slider on a graphical user interface. Alternatively, the reduced vector space may have 2 dimensions, and the user input may be implemented as a draggable point on a 2D graph of a graphical user interface or two sliders on a graphical user interface for selecting a value of each dimension. In another example the reduced vector space has 3 dimensions and the user input comprises a physical controller where pan, tilt and roll of the controller provide selection of a value of each dimension. Alternatively dimensionality reduction may be performed on the latent vector space to provide a reduced vector space with 6 dimensions and the user input may be provided as a controller where pan, tilt and roll of the controller and translation of the controller in the x, y and z dimensions provide selection of the value of each of the 6 dimensions.

As above, once the user has selected a timbre-component that provides the best results, this may be used to synthesise a full HRTF for use at runtime. For example, the timbre component may be added to an already synthesised HRTF comprising localisation features, since the application of the timbre component learnt in this way does not affect the localisation features.

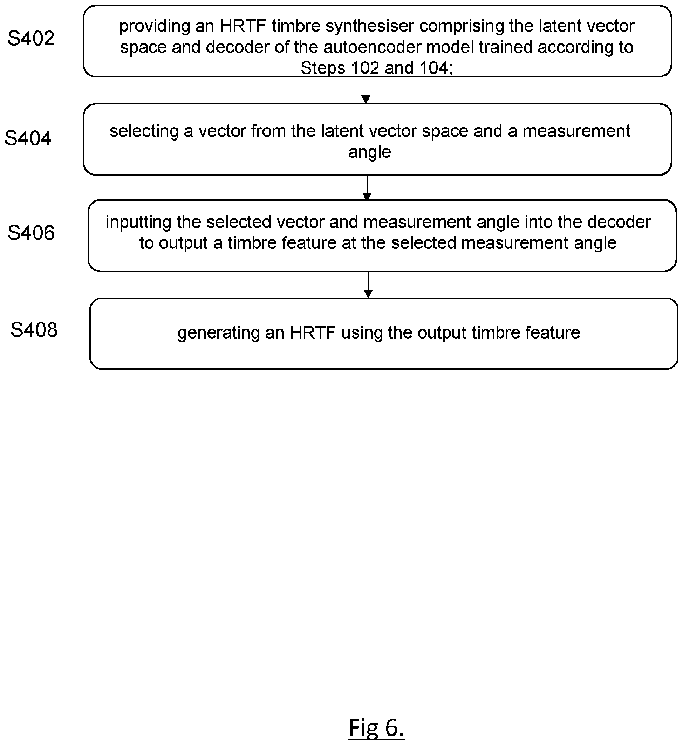

A method of HRTF synthesis is illustrated in Figure 6 and comprises a first step 402 of providing an HRTF timbre synthesiser comprising the latent vector space and decoder of the autoencoder model trained according to Steps 302 and 304 of Figure 5; a second step 404 comprising selecting a vector from the latent vector space and a measurement angle; a third step 406 of inputting the selected vector and measurement angle into the decoder to output a timbre feature at the selected measurement angle and a fourth step 408 of generating an HRTF using the output timbre feature.

**Neural compression using latent vector space**

The learned timbre space can be utilised as a compressed representation of a predefined selection of timbre profiles. Storing a database of HRTFs is extremely memory intensive. The timbre component of the HRTF comprises the same number of values and therefore also presents a technical challenge in how to store a database of HRTF timbre components for selection and use by a user. The latent vector space of the present invention allows for a database of HRTF timbre components to be stored as the latent vector space, only requiring the learned vector space and decoder.

As an example, a database of 100 profiles, 1000 measurements per profile and 256 sample stereo filters with floating point precision would require approximately 204.8 MB of disk space. The components required for real-time use of the trained model of the present invention are the Decoder module (2.60 MB) and the latent space encodings (2.46 MB). Therefore, in this example, the latent vector space offers a x40 compression ratio.

A method of compression of a plurality of HRTFs is illustrated in Figure 7. The method comprises a first step 502 comprising receiving a plurality of HRTF timbre profiles, each profile comprising a plurality of timbre features of a subject recorded at different measurement angles, each timbre feature comprising an HRTF measurement of a subject at a particular measurement angle, where the HRTF measurement has been processed to remove location-dependent features of the HRTF. The method comprises a second step 504 comprising encoding the plurality of HRTF profiles in the latent vector space trained according to steps 102 and 104 of Figure 5.

**Prediction of timbre features based on physiological parameters**

As described above, a personalised HRTF timbre can be determined by mapping user physiological data to an HRTF timbre. This method can be extended by predicting a vector from the latent vector space, rather than the timbre component directly. This allows for a greater range of HRTF timbres to be predicted since physiological features can be mapped to the vast range of timbre characteristics encoded in the latent vector space and therefore a greater degree of personalisation.

An example method of predicting HRTF timbre according to the present invention involves a first step of providing a training data set comprising a plurality of training instances, each comprising an HRTF timbre feature from a subject and accompanying physiological data encoding one or more physiological parameters of the subject. The second step comprises encoding the HRTF timbre features into a vector in the latent vector space learned using the method described above and finally training a machine learning model to predict the vector representing a subject's HRTF timbre feature based on input physiological data from the subject. The vector may then be used to generate the subjects HRTF timbre by inserting into the encoder with a measurement angle to generate the timbre feature for the input measurement angle. Predicting the timbre latent space vector rather than the timbre component may have advantages, in that it in then allows for synthesis of the timbre features along any and all measurement angles. It also provides an efficient measure for storing possible HRTF timbre components, such that at runtime, the user input the physiological data to determine the correct vector to select from the latent space and this is then used to generate the HRTF timbre and therefore personalise the HRTF.

The physiological training data may take a number of different forms, as long as it encodes physiological parameters responsible for the subject to subject variation in the HRTF timbre. Examples include data encoding measurements relating to one or more of a subject's head, shoulders and torso size and shape, data encoding measurements of the subject's ear size and shape, for example features of the pinnae and/or data encoding an image of the subject's ear. The physiological data may be encoded into an input vector and used to train a machine learning model, for example a classifier model, such as a fully connected or convolution neural network trained to output an output vector usable to predict the latent space vector encoding the timbre feature. In this way, the timbre component of a user can be generated based on physiological data and used to synthesise a personalised HRTF. The use of latent vector space retains the advantages explained above, particularly that it is measurement direction independent and can be applied to an HRTF without changing the localisation features, and the latent space provides a particularly efficiency compressed format for encoding the vast variation of possible timbre features.

## Specific Training Example

The following provides a specific example of a suitable machine learning model and one possible example of the selection of training parameters that could be used to implement the present invention.

The example uses the newly released Sonicom database (Engel, Isaac et al. "The sonicom hrtf dataset," J.Audio Eng. Soc, vol. 71, no. 5, pp. 241-253, 2023). It consists of 200 subjects and 828 HRTF measurements per subject. Azimuths are sampled every 5°(-175° to 180°). Elevations are sampled every 10° (-30° to 30°), and every 15° below and above that (-45° to 90°).

This example uses 48 kHz free field compensated HRTFs, each of which is processed as follows: (1) remove unwanted floor reflections by applying a time-domain Hann window in the form of a 75 sample unity pad followed by a 50 sample half-hann closing window; (2) diffuse field equalize; (3) loudness normalize; (4) reinterpolate the measurement grid to match azimuths (-172.5° to 180°) and elevations (-60° to 60°).

To extract the timbe component (i.e. the timbre feature) each HRTF is first processed to remove the spectral notches from the magnitude responses of each measurement (per ear, per angle). This process includes identifying notch boundaries, removing the necessary samples, re-interpolating the response and smoothing the output. We shall refer to this as their HRTF'. Measurements of the right ear are flipped such that they represent left ear measurements to provide a database of 400 individual ears. The average magnitude spectrum at each angle (the Average Response') is then calculated. For each subject, the difference between their HRTF' and the Average Response' is calculated to give each subject's Timbre'. A single timbre feature for this exemplary model is constructed as a 2D matrix that represents a subject's Timbre' data at all elevations for a single azimuth. Each timbre feature has the shape [257×17] corresponding to [Number of frequency bins × number of elevations]. Frequency ranges from 0 up to 24 kHz while elevation ranges from -60° to 60°.

Timbre features extracted from the HRTF measured at each ear defines a unique timbre class, thus the database consists of 200×2 timbre classes in total. The dataset is made up by one timbre feature per azimuth location, that is [48 azimuths × 400 timbre classes] = 19200 timbre features. Those are split into two sets for training and validation. Timbre features are randomly selected at 10 azimuth angles for random 146 left HRTFs and another random 10 azimuth angles for random 146 right HRTFs. The resulting [2×10×146] = 2920 features are used in the validation phase and the rest are used for training, forming an approximately 90%-10% split.

A model as illustrated in Figure 2 and described above is used. In this specific example, the Encoder module consists of multiple convolutional blocks each one followed by the LeakyRELU activation function and a batch normalization layer. The Decoder performs the inverse operation using transpose convolutional blocks. The Xavier uniform method (Xavier Glorot, "Understanding the difficulty of training deep feedforward neural networks," in International Conference on Artificial Intelligence and Statistics, 2010) is used for initializing the weights of both the Encoder and Decoder modules. The subject classification (equivalently "timbre classification") comprises four fully connected layers, an input layer with size 64 to match the latent size, two middle layers with 128 output neurons and an output layer with 400 output neurons, to match the total number of timbre classes in our dataset. The azimuth discrimination module 123 consists of four fully connected layers, an input layer with size 64 to match the latent size, two middle layers with 48 output neurons and an output layer with 48 output neurons, to match the total number of azimuths in our dataset.

As shown in Equation 1, the model is trained in a multitask learning manner to perform timbre reconstruction, timbre classification and azimuth discrimination. The model is trained for 2000 epochs and the evaluation is performed on the state when the best validation reconstruction loss was achieved. The batch size is set to 12 and the learning rate to 0.00005.

## Claims

1. A computer-implemented method of synthesising an HRTF, the method comprising:

   providing the HRTF of a subject measured at a particular measurement angle;
   processing the HRTF to remove localisation perception features of the HRTF, where the processing comprises:

   removing spectral notches from the measured HRTF, the resulting processed HRTF referred to as the HRTF'; and
   calculating a subject's HRTF timbre by subtracting a baseline HRTF at the measurement angle from the subject's HRTF', such that the HRTF timbre comprises subject-specific variations in the HRTF; the method further comprising:
   using the HRTF timbre to synthesise an HRTF.

2. The computer implemented method of claim 1 where the baseline HRTF comprises the average HRTF' at the measurement angle calculated over a plurality of subjects.

3. The computer implemented method of claim 1 or claim 2 where removing spectral notches comprises removing pinnae notches from the HRTF.

4. The computer implemented method of any preceding claim wherein removing spectral notches from the HRTF measurements further comprises:

identifying notch boundaries;
removing samples within the notch boundaries;
re-interpolating the HRTF measurement between the notch boundaries.

5. The computer implemented method of claim 4 wherein identifying notch boundaries comprises:

determining a centre frequency of each notch;
inverting the magnitude spectrum and performing a peak detection algorithm to determine the left and right boundaries of the notch, wherein preferably determining a centre frequency of each notch comprises:

determining an approximate centre frequency using a single processing method based on Linear Predictive Coding;
identifying local minima to determine the centre frequency of each notch.

6. The computer implemented method of any preceding claim wherein the HRTF comprises a diffuse field equalised HRTF.

7. The computer implemented method of any preceding claim wherein processing the HRTF further comprises removing phase information to remove interaural time delay, ITD.

8. The computer implemented method of any preceding claim wherein using the HRTF timbre to synthesis an HRTF comprises:

obtaining an input HRTF;
combining the HRTF timbre into the input HRTF.

9. The computer implemented method of claim 8 wherein the input HRTF comprises the baseline HRTF.

10. The computer-implemented method of any of claims 1 to 7 wherein using the HRTF timbre to synthesis an HRTF comprises:
adding localisation features to the HRTF timbre to construct an HRTF.

11. The computer implemented method of any preceding claim comprising:

calculating a plurality of HRTF timbres from different subjects;
storing the plurality of HRTF timbres;
selecting an HRTF timbre from the plurality of stored HRTF timbres and using the selected HRTF timbre to synthesise an HRTF for a user.

12. The computer implemented method of claim 11 wherein selecting an HRTF timbre comprises:

receiving a user selection of a plurality of HRTF timbres through a user input device;
combining the selected HRTFs timbres using averaging or interpolation to create a combined HRTF timbre;
synthesising an HRTF using the combined HRTF timbre.

13. The computer implemented method of claim 11 or 12 wherein selecting an HRTF comprises:

applying a synthesised HRTF comprising an HRTF timbre to an audio signal to provide a binaural audio output and outputting the binaural audio to the user;
varying the HRTF timbre of the synthesised HRTF applied to the audio signal to vary the binaural audio output to the user;
receiving a user selection and selecting the HRTF, comprising HRTF timbre, currently being applied when the user selection is received.

14. The computer implemented method of claim 11 or 12 wherein selecting an HRTF timbre comprises:
receiving user physiological data and selecting an HRTF timbre based on the received user physiological data; wherein physiological data comprises one or more of:

data encoding measurements of the user's head size or shape;
data encoding measurements of the user's shoulder size or shape;
data encoding measurements of the user's torso size or shape;
data encoding measurements of the user's ear size or shape;
an image of the subject's ears.

15. A system comprising a processor configured to perform the method of any preceding claim.

Fig. 1A

Fig. 1B

(0, 0) SONICOM 1 Left No Notches

Fig. 1C

(0, 0) SONICOM Avg Left

Fig. 1D

Fig. 1E

S102 — providing the HRTF of a subject measured at a particular measurement angle;

S104 — removing spectral notches from the measured HRTF, the resulting processed HRTF referred to as the HRTF'

S106 — calculating a subject's HRTF timbre by subtracting an average HRTF' at the measurement angle from the subject's HRTF', the average HRTF' comprising the average HRTF' at the measurement angle calculated over a plurality of subjects

S108 — using the HRTF timbre to synthesise an HRTF

Fig 2

S202 | Storing a plurality of HRTF timbres

S204 | Selecting an HRTF timbre from the plurality of HRTF timbers

S206 | Combining the selected HRTF timbre into an input HRTF

<u>Fig 3</u>

Fig 4

S302 — providing a training dataset comprising a plurality of timbre features, each timbre feature comprising an HRTF measurement of a subject at a particular measurement angle, where the HRTF measurement has been processed to remove localisation perception features of the HRTF

S304 — training an autoencoder model, that is conditioned using the measurement angle, to encode the input timbre feature into a latent vector space and reconstruct the input timbre feature from the latent vector space, thereby learning a latent vector space that encodes timbre information independent of the measurement angle, the latent vector space thereby usable to synthesise a timbre component of an HRTF

Fig 5.

S402 — providing an HRTF timbre synthesiser comprising the latent vector space and decoder of the autoencoder model trained according to Steps 102 and 104;

S404 — selecting a vector from the latent vector space and a measurement angle

S406 — inputting the selected vector and measurement angle into the decoder to output a timbre feature at the selected measurement angle

S408 — generating an HRTF using the output timbre feature

Fig 6.

S502  receiving a plurality of HRTF timbre profiles, each profile comprising a plurality of timbre features of a subject recorded at different measurement angles, each timbre feature comprising an HRTF measurement of a subject at a particular measurement angle, where the HRTF measurement has been processed to remove location-dependent features of the HRTF;

S504  encoding the plurality of HRTF profiles in the latent vector space trained according to steps 102 and 104.

Fig 7.

**EP 4 531 439 A1**

<table>
<tr><td colspan="2">Europäisches Patentamt<br>European Patent Office<br>Office européen des brevets</td><td>**EUROPEAN SEARCH REPORT**</td><td>Application Number<br><br>EP 24 20 2682</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/336858 A1 (BRIMIJOIN II WILLIAM OWEN [US] ET AL) 22 October 2020 (2020-10-22) * the whole document * ----- | 1-15 | INV. H04S7/00 G06N3/0455 |
| A | EP 4 044 626 A1 (SONY INTERACTIVE ENTERTAINMENT INC [JP]) 17 August 2022 (2022-08-17) * the whole document * ----- | 1,15 | |
| A | US 2014/334650 A1 (KUHR MARKUS [DE] ET AL) 13 November 2014 (2014-11-13) * paragraph [0106] * ----- | 1,15 | |
| A | US 2019/116442 A1 (NAIR VARUN [GB]) 18 April 2019 (2019-04-18) * paragraph [0200] * ----- | 1,15 | |
| A | EP 3 595 337 A1 (KONINKLIJKE PHILIPS NV [NL]) 15 January 2020 (2020-01-15) * paragraph [0170] * ----- | 1,15 | TECHNICAL FIELDS SEARCHED (IPC)<br><br>H04S<br>G06N |

The present search report has been drawn up for all claims

| Place of search | Date of completion of the search | Examiner |
|---|---|---|
| The Hague | 12 February 2025 | Streckfuss, Martin |

EPO FORM 1503 03.82 (P04C01)

## ANNEX TO THE EUROPEAN SEARCH REPORT
## ON EUROPEAN PATENT APPLICATION NO.

EP 24 20 2682

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | Publication date | Patent family member(s) | | Publication date |
|---|---|---|---|---|
| US 2020336858 A1 | 22-10-2020 | CN | 113767648 A | 07-12-2021 |
| | | EP | 3957086 A1 | 23-02-2022 |
| | | JP | 2022529203 A | 20-06-2022 |
| | | KR | 20210153653 A | 17-12-2021 |
| | | US | 2020336858 A1 | 22-10-2020 |
| | | US | 2021112364 A1 | 15-04-2021 |
| | | WO | 2020214496 A1 | 22-10-2020 |
| EP 4044626 A1 | 17-08-2022 | EP | 4044626 A1 | 17-08-2022 |
| | | GB | 2603768 A | 17-08-2022 |
| | | US | 2022256300 A1 | 11-08-2022 |
| US 2014334650 A1 | 13-11-2014 | EP | 2258120 A2 | 08-12-2010 |
| | | US | 2011135098 A1 | 09-06-2011 |
| | | US | 2014334650 A1 | 13-11-2014 |
| | | US | 2017180907 A1 | 22-06-2017 |
| | | WO | 2009111798 A2 | 11-09-2009 |
| US 2019116442 A1 | 18-04-2019 | GB | 2544458 A | 24-05-2017 |
| | | US | 2017105083 A1 | 13-04-2017 |
| | | US | 2019116442 A1 | 18-04-2019 |
| EP 3595337 A1 | 15-01-2020 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ARMSTRONG, CAL et al.** A perceptual evaluation of individual and nonindividual hrtfs: A case study of the sadie ii database. *Applied Sciences*, 2018, vol. 8 (11)
- **VIKAS C. RAYKARET**. Extracting the frequencies of the pinna spectral notches in measured head related impulse responses. *The Journal of the Acoustical Society of America*, July 2005, vol. 118 (1), 364-374
- **SIMONE SPAGNOL** ; **FEDERICO AVANZINI**. Frequency estimation of the first pinna notch in head-related transfer functions with a linear anthropometric model. *Proceeedings of the 18th International Conference on Digital Audio Effects*, 2015
- **CORENTIN GUEZENOC** ; **RENAUD SEGUIER**. HRTF Individualization: A Survey. *arXiv e-prints, p. arXiv:2003.06183*, March 2020
- **ENGEL, ISAAC et al.** The sonicom hrtf dataset. *J.Audio Eng. Soc*, 2023, vol. 71 (5), 241-253
- **XAVIER GLOROT**. Understanding the difficulty of training deep feedforward neural networks. *International Conference on Artificial Intelligence and Statistics*, 2010